Europäisches Patentamt

European Patent Office

Office européen des brevets

(19)

(11) **EP 1 143 659 A1**

(12) **EUROPEAN PATENT APPLICATION**
published in accordance with Art. 158(3) EPC

(43) Date of publication:
**10.10.2001 Bulletin 2001/41**

(51) Int Cl.⁷: **H04L 12/18, H04L 9/36, H04L 9/32, H04H 1/00, H04N 7/16**

(21) Application number: **00971709.1**

(22) Date of filing: **01.11.2000**

(86) International application number:
**PCT/JP00/07682**

(87) International publication number:
**WO 01/33771 (10.05.2001 Gazette 2001/19)**

(84) Designated Contracting States:
**DE FR GB TR**

(30) Priority: **01.11.1999 JP 31165199**
**05.11.1999 JP 31452199**

(71) Applicant: **Sony Corporation**
**Tokyo 141-0001 (JP)**

(72) Inventor: **AKACHI, Masateru,**
**c/o Sony Corporation**
**Tokyo 141-0001 (JP)**

(74) Representative: **DeVile, Jonathan Mark, Dr. et al**
**D. Young & Co**
**21 New Fetter Lane**
**London EC4A 1DA (GB)**

(54) **INFORMATION TRANSMISSION SYSTEM AND METHOD, TRANSMITTER AND RECEIVER, DATA PROCESSING DEVICE AND DATA PROCESSING METHOD, AND RECORDED MEDIUM**

(57)    When data is transmitted individually to receiving apparatuses, an individual address inherent to a receiving apparatus is appended to the data before transmission, and when common data is transmitted to receiving apparatuses of a certain group, common address information denoting the common portion of said address common to a group of the receiving apparatuses and address range information designating the range of a common portion of the address are appended to the date before transmission. Then, the transmitted data is received, is decoded only when the individual address and the address appended to the data coincide with each other, or only when the individual address and the common address information appended to the data agree with each other when compared within a range indicated by the address range information.

FIG. 6

**EP 1 143 659 A1**

**Description**

Technical Field

This invention relates to an information transmission system and method, a transmitting apparatus, and receiving apparatus, and is suitably applied to an information transmission system which is to transmit information via a satellite, for example. In addition, this invention relates to a data processing device, a data processing method, and a recording medium, and in particular, to data processing devices, data processing methods and recording media which are capable of easily restricting terminals (user) to obtain data when the data is broadcasted through a satellite circuit for example.

Background Art

The conventional digital satellite broadcasting system utilizes a conditional access (CA) in which the only those legitimate subscribers who have signed up a contract for reception are allowed to receive broadcast.

In such a conditional access a private key is given in advance to those subscribers who have signed a contract for reception. The transmitter encrypts broadcast data using the private key, to transmit via a satellite. Then, the subscribers decode the received encrypted waves using the private key, which allows the only subscribers having made a contract for reception to watch and listen to the broadcast.

In recent years a satellite data transmission system is considered, which is to perform transmission of data in a digital satellite broadcasting system. Since the satellite circuit is rapid in transmission speed compared to such circuits as the telephone circuit and ISDN, it has a merit of transmitting a large amount of data in a short time.

In this satellite data transmission system, if various reception controls can be used in general message communication to transmit the same data to all the recipients (this is called "broadcast" hereinafter), and group communication to transmit the same data to a certain group of recipients (this is called multicast hereinafter), in addition to an individual communication to transmit a different set of data to individuals (this is called "uni-cast" hereinafter), the usability of the satellite data transmission system may increase significantly.

However, the conditional access system has a problem that reception control can not be utilized in the uni-cast and multicast because it is designed on the assumption that all the recipients always receive and watch the same information.

Further, It is possible to secure a plurality of channels in the same band as the case of transmitting data in the form of analog signals, and to provide higher quality of images and sounds, when transmitting images, and sounds, etc. in the form of digital data, so that in such a field as satellite broadcasting and satellite communication, systems are increasingly diffusing, which is to provide images and sounds in the form of digital data. Such digital satellite broadcast services are commenced as SkyPerfect TV! and DirecTV in Japan, DirecTV in US, and Canal Plus in Europe, for example. The digitalization of broadcasts makes it possible to reduce broadcast costs per channel, and to provide programs and data processed by the computer. Also, because of such digitalization, services are spreading, in which programs, images, etc. are provided linking to each other.

In digital satellite broadcast services the digital data of images and sounds is converted into a format based on the MPEG (Moving Picture Experts Group) 2, or DVB (Digital Video Broadcasting) derived from the MPEG 2, and furthermore, multiplexed to be transmitted in the form of radio waves. Received by a transponder of a satellite, the radio waves are amplified, and subjected to other necessary processes to be transmitted to the earth.

The transmission band for the transponder is as big as 30Mbps (Mega bit per second), so that it is possible to distribute digital data of high quality at high speed utilizing the whole of such a big band. (Note, however, that, even though the transponder has a transmission band of 30Mbpsa, a real transmission band would be somewhere around 27Mbps at most because error correction codes are generally affixed.)

However, generally, the transmission band for the transponder is used by being divided into many for multiple channels, because of costs. In this case, although the content of digital data transmitted on each channel is different, a mechanism of receivers which receive the digital data on each channel remains the same or common. Consequently, a conditional access (CA) mechanism is necessary for allowing the only limited users to receive digital data provided.

That is to say, in the case of performing so-called data broadcasting in particular, as the quantity of data per program is smaller compared to the case of distributing images or sounds, a charging unit or charging system is expected to become more complex. Therefore, a conditional access mechanism capable of performing more specific reception control is needed to cope with such a problem. The conditional access mechanism is also required to prevent leakage of secret information in distribution.

Generally, the conditional access mechanism is realized by performing encryption on a data stream to be distributed. As to encryption methods, two types are known, roughly; a common key cryptosystem (private key cryptosystem), and public key cryptosystem. In digital satellite broadcasting the common key cryptosystem is more often used because of a lighter load of encryption/decryption processes compared to the public key cryptosystem.

In the common key cryptosystem a row of codes being a decryption key equivalent to an encryption key is given to a certain subscriber A by some method, and data is encrypted with the encryption key for distribution. The encrypted data is designed so as to make it hard to analogize the encryption key (decryption key) and the original data by means of converse calculations or other means. Accordingly, an un-subscribed user B can not restore the original data correctly even if receiving the encrypted data. On the other hand, the subscribed user A can restore the original data by decrypting the encrypted data with the use of the decryption key given when the contract is made. Therefore, making a contract for reception subscription is equivalent to reception of the decryption key.

By the way, in the case that both A and C are subscribers for example, when the contract with A expires, or when the user A does wrong things, the current encryption key is changed, and a decryption key equivalent to the new encryption key is provided to C only. Thereby, the user A who was a subscriber or did the wrong things can not decode data which is encrypted with the new encryption key, while the legally subscribed user C can normally decode data, which is encrypted with the new encryption key, with the new decryption key, without problems.

It is troublesome, however, to alter an encryption key, and furthermore to provide a new decryption key equivalent to the new encryption key to a lawful subscriber every time when the subscription of a user expires or when improper conducts are discovered.

Description of the Invention

The present invention is made in consideration of the foregoing points, and intended to propose an information transmission system and method, and transmitting apparatus, and receiving apparatus that are capable of performing reception control in various modes.

In addition, the present invention is intended to be able to easily restrict users to obtain (receive) data correctly.

In order to solve such problems, in an information transmission method according to the present invention of transmitting data from a transmitting apparatus through a predetermined transmission circuit to a plurality of receiving apparatuses, each having an individual address, when data is individually transmitted to receiving apparatuses, an individual address of each receiving apparatus is affixed to the data, and when common data is transmitted to a certain group of receiving apparatuses, the data is affixed with common address information denoting the common portion of addresses common to all the receiving apparatuses of the voluntary group, and with address range information defining the portion common to all the addresses. Then, the data is received, and can be decoded only when the individual address and the address affixed to the data coincide with each other, and only when the individual address and the common address information affixed to the data agree with each other within the portion denoted by the address range information.

When common data is transmitted to the receiving apparatuses of a certain group, the data is affixed with common address information denoting the common portion of addresses common to the receiving apparatuses of the voluntary group, and address range information defining the common portion of the address. On the side of receiving apparatuses the individual address and common address information affixed to the data are compared on a basis of the range denoted by address range information, and when the results of the comparison coincide with each other, the data can be decoded, thus performing reception control in various modes in easy structure.

A data processing device according to the present invention comprises retrieving means for retrieving as the marked entry an entry having an address coinciding with the address of a data block from and referring to a table containing addresses and entry validity information indicating whether the entry to which the address is registered is valid, judgment mean for judging whether the marked entry is valid based on the entry validity information registered to the marked entry, and output control means for controlling the output of data arranged in the data block based on the judgment result obtained by the judging means.

When the marked entry is valid, the output control means outputs the data at an address arranged in the data block, and can destroy the data when the marked entry is not valid..

Furthermore, when the data is encrypted, the data processing device may be provided with an decoding means for decoding the encrypted data.

When the data is encrypted with a key assigned to the address of the data, and when each entry of the table has a registered key assigned to the address in addition to the address and entry validity information, the decoding means can decrypt the data with the use of the key registered on the table.

The decoding means can decode the data arranged in the data block with the use of the key on the table assigned to the address of the data block.

When key validity information indicating whether the key is valid is registered to each entry on the table, in addition to the address, entry validity information, and the key, the decoding means judges whether the key is valid based on the key validity information of the key assigned to the address of the data block, and if the key turns out to be valid, the data can be decoded with the use of that key.

More than two keys assigned to that address can be registered to each entry of the table, in addition to the address and entry validity information.

To each entry of the table can be registered key validity information indicating whether the key is valid as to each of more than two keys.

A data processing device employing the present invention may be furthermore provided with table storage means for storing the table.

The address may be the MAC (Media Access Control) address of a communication terminal to receive data.

Data blocks may conform to the specifications of the DVB (Digital Video Broadcasting).

A data processing device employing the present invention may be produced of a one-chip IC (Integrated Circuit).

A data processing method employing the present invention is characterized by and comprises the retrieval step of retrieving as the marked entry an entry having an address coinciding with the address of a data block from and referring to a table containing addresses and entry validity information indicating whether an entry to which the address is registered is valid, judgment step of judging whether the marked entry is valid based on the entry validity information registered to the marked entry, and output control step of controlling the output of data arranged in the data block based on the judgment result obtained by the judging means.

A recording medium according to the present invention is characterized by and comprise the retrieval step of retrieving as the marked entry an entry having an address coinciding with the address of a data block from and referring to a table containing an address and entry validity information indicating whether the entry to which the address is registered is valid, judgment step of judging whether the marked entry is valid based on the entry validity information registered to the marked entry, and output control step of controlling the output of data arranged in the data block based on the judgment result obtained by the judging means.

A data processing device data processing method, and recording medium retrieve as the marked entry an entry having an address coinciding with the address of a data block from and referring to a table containing an address and entry validity information indicating whether the entry to which the address is registered is valid. And, judgment is made on whether the marked entry is valid based on the entry validity information registered to the marked entry, based on the result of which the output of data arranged in the data block is controlled.

According to the data processing device, the data processing method and the recording medium employing the present invention, an entry having an address matching the address of a data block is retrieved as the marked entry from a table, referring to the same table having an entry registering an address and entry validity information indicating whether an entry to which the address is registered is valid. And, it is judged based on the entry validity information registered to the marked entry whether the marked entry is valid, based on the result of which the output of data arranged in a data block is controlled. As a result, it is possible to easily restrict users capable of obtaining data normally.

Brief Description of the Drawings

Fig. 1 is a block diagram showing the whole structure of a satellite data transmission system according to the present invention.

Fig. 2 is a block diagram showing the circuit structure of a receiving apparatus.

Fig. 3 is a schematic diagram showing a header format.

Fig. 4 is a schematic diagram showing relations between masks and MAC addresses.

Fig. 5 is a schematic diagram showing the data structure of a key table.

Fig. 6 is a flowchart explaining decode processing.

Fig. 7 is a block diagram showing a structural example of an embodiment of a broadcast system employing the present invention.

Fig. 8 is a flowchart explaining the processing by a transmission system 101 in Fig. 7.

Fig. 9 is a diagram showing the format of a section and a section header.

Fig. 10 is a block diagram showing a structural example of a receiving apparatus 122 in Fig. 7.

Fig. 11 is a diagram showing a key table.

Fig. 12 is a flowchart used in explaining the processing by a receiving apparatus 122 in Fig. 10.

Fig. 13 is a block diagram showing a structural example of an embodiment of a computer employing the present invention.

Best Mode for Carrying Out the Invention

Hereinafter, an embodiment of the present invention will be explained in detail with reference to the drawings.

(1) First Embodiment

(1-1) Whole Structure of Satellite Data Transmission System

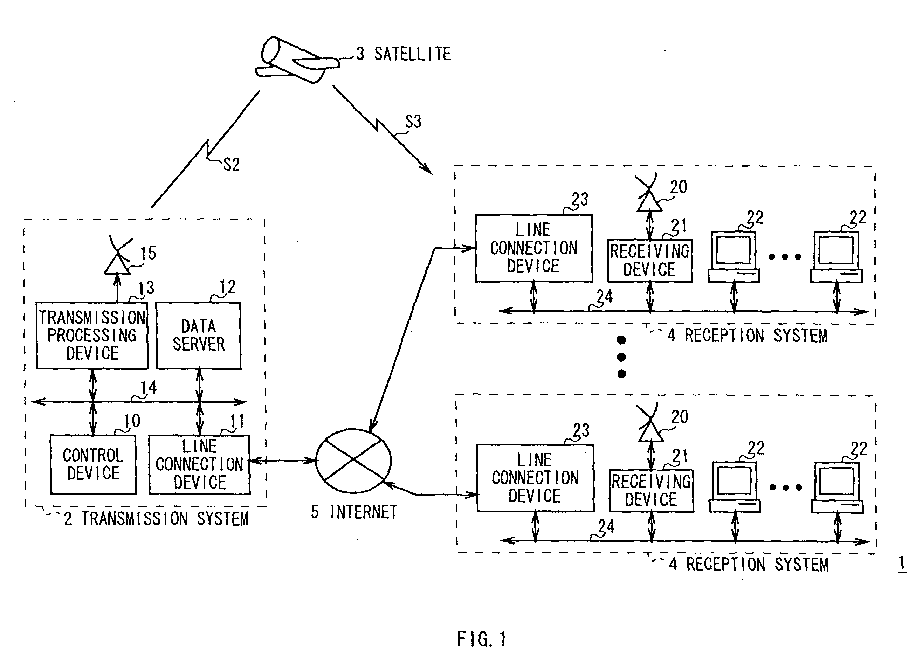

In Fig. 1, a reference numeral 1 shows the whole satellite data transmission system to which the present invention is applied, and which consists of a transmission system 2, satellite 3, and a plurality of reception systems 4 having the same structure. The transmission system 2 and each of the reception systems 4 are connected on the Internet 5. A contract is made in advance on the use of the satellite data transmission system 1 between a service provider managing the transmission system 2 and each recipient having a reception system 4.

In the transmission system 2, a control device 10 to control the whole transmission system 2, a circuit connection device 11, a data server 12, and a transmission processing device 13 are connected on a local network 14.

The control device 10 receives a data read-out demand which is transmitted from an information processing device 22 in the reception system 4. Responding to the data read-out demand, the control device 10 reads out data from the data server 12 or a data server (not shown in figure) on the Internet, which is then fed to the transmission processing device 13.

The transmission processing device 13 stores an encryption key correspondence table which shows MAC (Media Access Control) addresses being identification numbers inherent to the respective information processing devices 22 in the reception systems 4, and private keys corresponding to the MAC addresses. Based on the encryption key correspondence table, the transmission processing device 13 encrypts the read data with the use of a private key matching the MAC address of the information processing device 22 which is a transmission destination. Further, the transmission processing device 13 makes "0" the value of the CKI (Common Key Indicator, to be described later) of the data to be transmitted to all the information processing devices 22 as the broadcast and encrypts it using a given common key. Furthermore, the transmission processing device 13 packets the encrypted data in the format defined to the DVB (Digital Video Broadcasting) data broadcast specifications, which is then transmitted as an uplink wave S2 to the satellite 3 via the transmission 15.

Upon the receipt of the uplink wave S2 the satellite 3 amplifies it and transfers it as the downlink wave S3 to the reception systems 4.

In the reception system 4, the receiving apparatus 21, the circuit connection device 21, and a plurality of information processing devices 22 being, for example, personal computers are connected to each other on a local network 24.

The receiving apparatus 21 decodes the data, which is transmitted to the information processing device 22, by performing demodulation processing and decode processing on the downlink wave S3 received via a receiving antenna 20, and supplies it to the information processing device 22.

When a data read-out demand is made by a user, the information processing device 22, responding to it, transmits the data read-out demand to the transmission system 2 via the circuit connection device 23 on the Internet 5.

(1-2) Structure of Receiving Apparatus

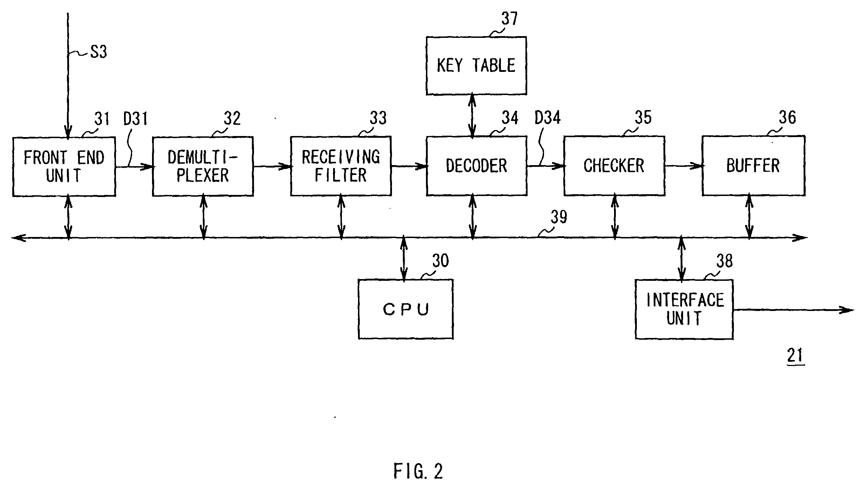

Next, explanation will be given on the receiving apparatus 21 in the reception system 4 with reference to Fig. 2.

In the receiving apparatus 21, a CPU (Central Processing Unit) 30 controlling the whole receiving apparatus 21, is connected, with a bus 39, to a front end unit 31, a demultiplexer 32, a receiving filter 33, a decoding unit 34, a checker 35, a buffer 36, a key table 37, and an interface unit 38.

The front end 31 demodulates the downlink wave S3 received via the receiving antenna 39, which is fed as a data stream D31 to the demultiplexer 32. The demultiplexer 32 separates the only necessary packets from the data stream D31 based on the PID (Packet ID), and supplies them to the receiving filter 33. The receiving filter 33 checks the payloads of the packets supplied from the demultiplexer 32 to destroy packets unnecessary for data decode processing.

In accordance with a decoding process to be described later, the decoding unit 34 refers to the key table 28 with the MAC address of the information processing device 22 (Fig. 1) as the retrieval key to obtain a decoding key from the key table 28. Then, the decoding unit 34 decodes the data stream D31 with the use of the decoding key obtained, and supplies the resultant as the decoded data D34 to the checker 35.

The checker 35 examines whether or not the decoding processing is conducted correctly with regard to the decoded data D34. Then, responding to a demand from the CPU 30, the buffer 36 inputs the decoded data D34 to the interface unit 38 through the bus 39. The interface unit 38 supplies the decoded data D34 to the information processing device 22 on the local network 24 (Fig. 1).

In this way the receiving apparatus 21 receives the downlink wave S3, extracts the only data to be supplied to the information processing device 22, and supplies it to the information processing device 22.

(1-3) Decode Processing of Digital Stream

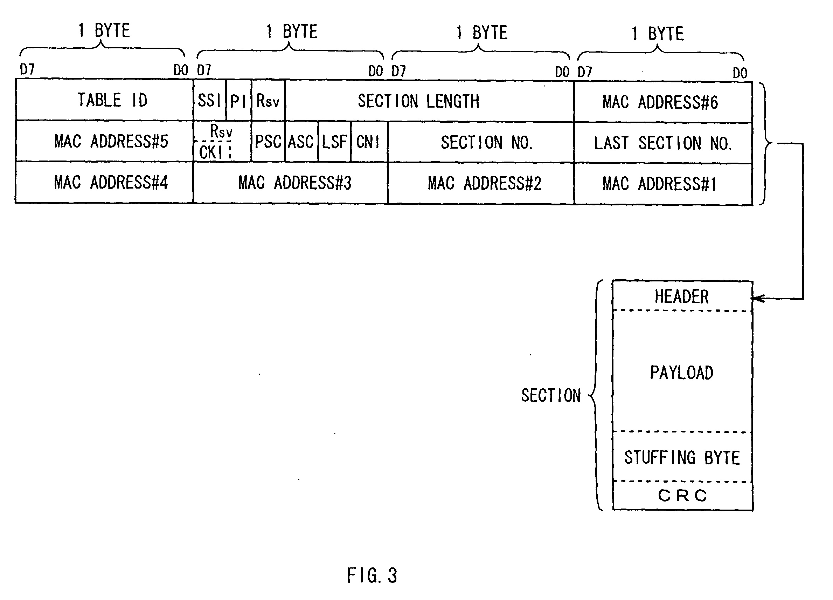

As shown in Fig. 3, the digital stream D31 is affixed with packet header information at the top of the payload as well as a stuffing byte (invalid byte) and CRC (Cyclic Redundancy Code) at the bottom of the payload, and is encapsulated so as to be processed as a section based on the DVB data broadcasting specifications (Datagram-section). The MAC address#6 means a byte (8 bits) from Bit 7 to Bit 10, with the highest bit of the MAC address as Bit 47 and the lowest as Bit 0.

The decoding unit 34 determines whether to receive a packet, on a basis of the MAC address described in each packet of the data stream D31 received and the key table 37.

In such packet discrimination processing the receiving apparatus 21 according to the present invention performs a mask bit process to designate a bit position to be compared in the MAC address, a MAC address conversion process to converts the MAC address into a value having less bits and to discriminate packets using the converted value, and a MAC address pass process to let the packets having a specific MAC address pass unconditionally.

The mask bit process is to perform logical product on the mask bit and the result of comparison between the MAC address described in the section header and the MAC address in the key table 37. When the exclusive or is taken as ^, the logical product as &, the MAC address described in the session header as MR, k-th AC address in the key table as MAC (k), and the weight of the bit as 1, the following equation is calculated for each bit in the range of $0 \leqq 1 \leqq 47$.

$$(\sim (MR_1 \wedge MAC_1 (k))) \, \& MASK_1 (k) \qquad (1)$$

Only when All the results are "0", both MAC addresses are identical.

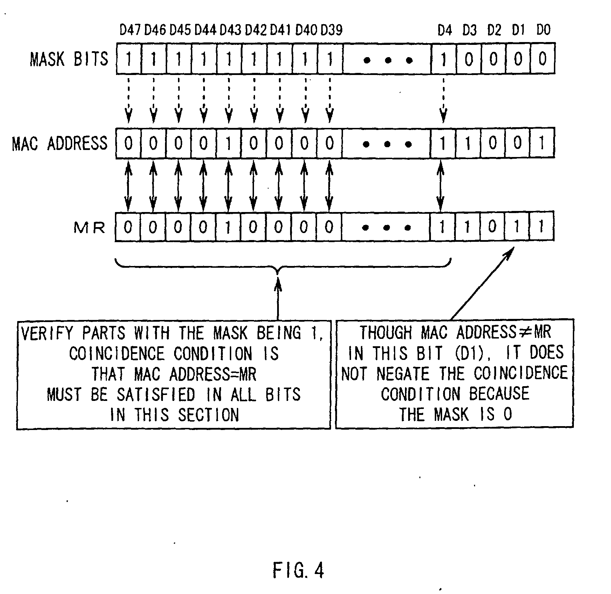

It means that the MR and the MAC address are compared only when the mask is a bit of "1". The Fig. 4 shows the relations between this mask bit and comparison operation between the MR and the MAC address.

In the case of Fig. 4 the mask bits are "0" from D0 to D3, and "1" from D4 to D47. When the mask address is checked using the mask bits, the sameness of the MAC address and MR in a section from D4 to D47, in which the mask bits are all "1", is the condition for the identity of the MAC addresses, while the sameness of the MAC address and MR does not matter in a section from D0 to D3 where the mask bits are all "0". Thus, by checking only a part of the MAC addresses using the mask bits, it is possible to conduct the multicast (group communication) where the same packets are distributed to certain information processing devices 22 each having a different MAC address. Also, with all the mask bits being "1", that is, "0xFFFFFFFFFFFF", all the bits of the MAC address are checked, whereby the uni-cast (individual communication) can be carried out.

In carrying out the multicast using mask bits, it is premised on an assumption that a common part exists in the MAC address of each information processing device 22. However it is hard to prepare such information processing devices 22, and besides it is feared that flexibility may be wanted in running a system. In this case, the problem can be solved by creating a common part in the MAC addresses falsely by rewriting the packet header on the basis of the correspondence table of the MAC addresses of actual information processing devices 22 and MAC addresses described in the packet headers.

The MAC address conversion process is to operate a certain formula (Hash function) with regard to an input MAC address to obtain a value reduced to a bit number smaller than 48 bits, and perform a search on a table (Hash table) describing whether to let it pass, with the obtained value as a key. The reason why the bit number is reduced is because the Hash table is made smaller. Any Hash function may be used as long as it be able to distribute input MAC addresses well. For example, obtain a CRC, and assume that the higher 6 bits are p, and when Pass (p) is "1", allow it to pass, and when "0", destroy it. Here, the pass is the table of $2^6 = 64$ bits. In this way, the circuit scale of the decoder unit 34 can be made smaller by reducing the bit number of a MAC address using the Hash function.

The MAC address passage process is to let it pass if a MAC address described in the header of a packet is an address for a specific broadcast regardless of the state of the key table. If an MAC address described in the header of a packet is 0xFFFFFFFFFFFF (this address is called "broadcast address"), it is always reckoned as a broadcast and allowed to pass. In the present invention this MAC address passage process is made prior to the mask bit process and MAC address conversion process. Because of this, it is not necessary to search the key table when the MAC address described in the packet header is a broadcast address, resulting in the improvement of process speed.

In this manner the decoding unit 34 discriminates packets on the basis of a MAC address described in the header of a packet, the MAC address of an information processing device 21, and mask bits.

Subsequently the decoding unit 34 detects whether or not discriminated packets have been encrypted. If the packets have been encrypted, a decoding process is performed with a decoding key taken out of the key table. For the broadcast, however, it is necessary to prepare a common key which is a decoding key shared by a plurality of MAC addresses.

The receiving apparatus 21 employing the present invention judges whether to use a common key, using the section 6th byte from the highest (D7 of the second byte on the second line in Fig. 3). This is called "CKI" (Common Key Indicator) in the present invention. It is stipulated that, when the CKI is "1", an individual key is used, which is extracted from the key table by means of the MR, MAC address, and mask bit, and that, when the CKI is "0", the common key is used regardless of the setting of the key table. In the DVB data broadcast specifications the CKI is defined as "reserved" with "1" taken as the value. A common key being considered to be rather a special processing method compared to an individual key, the agreement with the DVB data broadcast specifications is attained by the stipulation that a common key be used when the CKI is "0".

Although a special storage area may be prepared for a common key, it is desirable to share data on a special line on the key table, making the process common to an individual key as well as enabling the effective use of the storage area. Preferably the starting line, namely the first line should be designated as the special line. Because the first line does exist regardless of the number of lines n of the key table so that it is possible to retain or retrieve the common key without changing the order of procedure regardless of the existence of receiving apparatuses with different values of n.

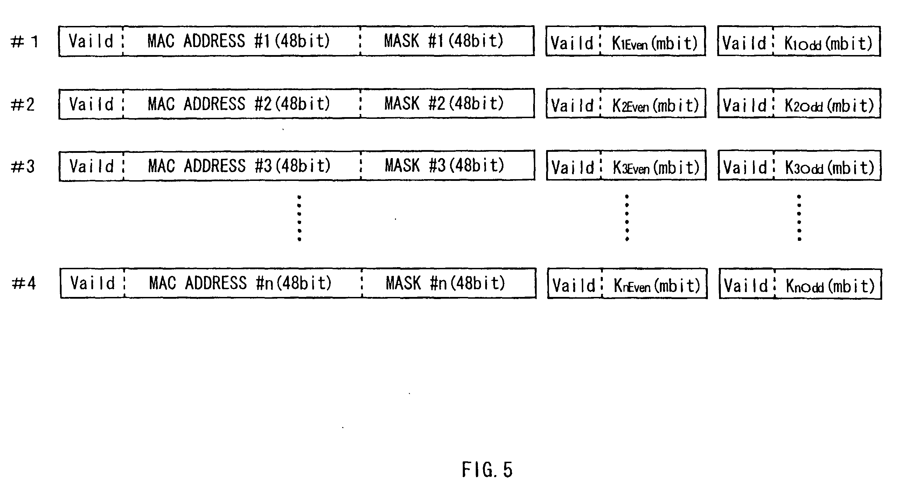

The Fig. 5 shows the structure of key table. The MAC address #1 denotes the MAC address described on the first line of the key table, the mask #1 denotes a mask bit a mask bit corresponding to the MAC address #1, and $k_{1Even}$, $k_{1Odd}$ denote key data of Even/Odd corresponding to each MAC address #1, having a bit width m based on an encryption form. The key table possesses a plurality (n pcs.) of structures similar to the above. The greatest number or upper limit is determined by the circuit scale the key table 28 can have.

The MAC addresses and key data each has an independent valid flag, making it possible to manage whether values are valid or not individually, so that the valid flags can be utilized to discriminate MAC addresses as well. Also, because the key table has an independent flag for each line, the key table may contain vacant lines (invalid lines). Accordingly, what is needed to nullify the information of particular lines temporarily is to simply make the Valid bits of the MAC addresses "0", which is preferable for process at high speed.

The decoding unit 34 decodes packets with the use of decoding keys thus obtained.

(1-4) Decode Processing Procedure

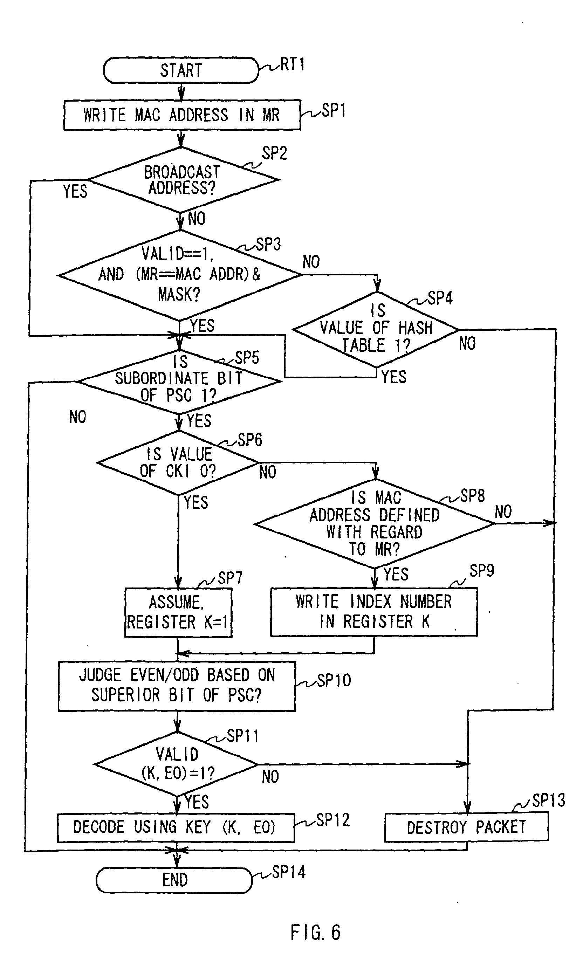

Next, explanation of the decode processing procedure for digital streams will be given with reference to the flowchart in Fig. 6.

The decoding unit 34 starts the processing at RT1, and after reading the MAC address of 48 bits described in the packet header into a register MR at the step SP1, proceeds to the next step SP2.

At the step SP2 the decoding unit 34 judges whether the value of the register MR is equal to the broadcast address (0xFFFFFFFFFFFF). When an affirmative result is obtained at the step SP2, it denotes that the value of the register MR is equal to the broadcast address, that is to say, this packet is a broadcast packet. Skipping the steps SP3 and SP4, the decoding unit 34 moves on to the step SP5.

On the other hand, when a negative result be obtained at the step SP2 it means that the register MR is not equal to the broadcast address, that is, this packet is not a broadcast packet. The decoding unit 34 proceeds to the step SP3.

At the step SP3 the decoding unit 34 searches each line on the key table from #1 line in order on the basis of the expression (1) to check to see when Valid bits are "1" (namely, in a valid state), and whether there exists lines where the register MR and MAC address are equal in all the bits in a section having the mask bit of "1".

When an affirmative result is obtained at the step SP3, it means that there exists lines where the register MR and MAC address are equal in all the bits in a valid section having the mask bits of "1", then the decoding unit 34 goes on to the step SP5.

Whereas, a negative result, when obtained at the step SP3, indicates that there is no line where the register MR and MAC address is equal in all the bits in a valid section having the mask bits of "1". Then, the decoding unit 34 proceeds to the step SP4.

At the step SP4 the decoding unit 34 creates a Hash value out of the MAC address described in the packet header with the use of a Hash function, with which a specific Hash table is retrieved, and it is judged whether a bit corresponding to the Hash value is "1".

A negative result at the step SP4, when obtained, indicates that the bit of the Hash table is "0", and that this packet is not a packet that a receiving apparatus 21 is to receive, then the decoding unit 34 proceeds to the step SP13 and destroys that packet, terminating the processing at the step SP14.

On the other hand, when an affirmative result is obtained at the step SP4, it means that the bit of the Hash table is "1", and this packet is a packet that the receiving apparatus is to receive. The decoding unit 34 moves on to the step SPS.

At the step SP5 the decoding unit 34 judges on the basis of the values of lower bits of the PSC (Payload Scrambling Control) (Fig. 3) of the packet header whether the packet has been encrypted. When a negative result is obtained at the step SP5, it means that the lower bits are "0", that is, the packet has not been encrypted. Then, the decoding unit 34 proceeds to the step SP14 and transfers the packet to the checker 35 at a later stage without performing an encryption cancel processing, terminating the processing.

Whereas, an affirmative result at the step SP5, when obtained, indicates that the lower bits are "1", namely the packet has been encrypted. The decoding unit 34 then moves on to the step SP6.

At the step SP6 the decoding unit 34 judges on the basis of the value of the CKI (Fig. 3) in the packet header whether the packet has been encrypted with the use of a common key. When an affirmative result is obtained at the step SP6, it means that the CKI is "0", that is, the packet has been encrypted with the use of a common key. Then, the decoding unit 34 proceeds to the step SP7, and substitutes "1" denoting a common key for the register k retaining the retrieval numbers of keys, moving on to the step SP10.

On the other hand, when a negative result is obtained at the step SP6, it means that the CKI is "1", that is, the packet has been encrypted with the use of an individual key, then the decoding unit 34 proceeds to the SP8.

At the step SP8 the decoding unit 34 searches the key table, a line after another, based on the expression (1), and determines whether there exists a MAC address coinciding with the MR on the key table. It should be noted that packets which should not be received as a result of the discrimination by means of the Hash table at the step SP4, are allowed to pass should the Hash values happen to coincide. However, because those packets are rediscriminated at the step SP8, no decoding processing is carried out on them erroneously. Also, note that since the packets not encrypted will not pass through the step SP8, they are destroyed at a subsequent circuit or by the information processing device 22.

The searching of the key table is performed from the first line of the key table and on, and checking is repeated until a first coincidence is encountered. Here, a valid address means that the Valid bits shown in Fig. 5 are in an activated state. As an example, assuming that an active state is referred to the state where the Valid bits are "1", it is reckoned that information on the lines with Valid bits of "0" is invalid. For example, when the Valid bits of the MAC address#2 are "0", those values are not referred to no matter what is set to $K_{2Even}$, $K_{2Odd}$.

When a negative result is obtained at the step SP8, it indicates that there are no MAC addresses coinciding with the MR on the key table, and that this packet is not a packet that the receiving apparatus 21 is to receive. Then, the decoding unit 34 proceeds to the step SP13, and destroys the packet, terminating the processing at the step SP14.

On the other hand, when an affirmative result is obtained at the step SP8, it indicates that there exist MAC addresses that coincide with the MR, and that these packet are packets that the receiving apparatus 21 is to receive. The decoding unit 34 moves on to the step SP9, and substitutes for the register k the retrieval numbers of the keys with which the MAC addresses coincide under the condition of expression (1), and then proceeds to the step SP10.

At the step SP10 the decoding unit 34 judges based on the higher bits of the PSC whether this packet has been encrypted with either a key in an Even period or a key in an Odd period. It is to be stipulated, for example, that when the higher bits of the PSC are "0", the packet is in an Even period, and "1" in an Odd period.

When the higher bits of the PSC are "0", the decoding unit 34 retrieves from the key table a key in an Even period and the values of Valid bits of $K_{iEven}$ oriented to the MAC address#I coincided. When the higher bits of the PSC are "1", the decoding unit 34 retrieves from the key table a key in an Odd period and the values of Valid bits of $K_{iOdd}$ oriented to the MAC address#I coincided, and then proceeds to the step SP11.

At the step SP11 the decoding unit 34 judges whether the value of the Valid bits retrieved are "1" (namely Valid (k, EO)=1). When a negative result is obtained at the step SP11, it denotes that Valid (k, EO) is "0", that is, even though the packet has been encrypted, there exists no valid decoding key (individual key). The decoding unit 34 proceeds to the step SP13, and destroys the packet, terminating the processing at the step SP14.

Whereas, an affirmative result at the step SP11, when obtained, indicates that Valid (k, EO) is "1", that is, there exists a valid decoding key (individual key), and then the decoding unit 34 proceeds to the step SP12.

At the step SP12 the decoding unit 34 retrieves from the key table 37 a key (k, EO), namely a decoding key corresponding to the $k^{th}$ EO, with which the packets are decoded and output to the check at a later stage, terminating the processing at the step SP14.

Thus, the decoding unit 34 performs packet decoding processing suitable for each distribution mode of the uni-cast, multicast, and broadcast on the basis of the key table 37 and Hash table.

Because the retrieval processes (steps SP5 to SP13) in the foregoing decoding processing of decoding keys are performed independently of the discrimination processes (steps SP1 to SP4) of MAC addresses, encryption processes can be performed on the broadcast addresses, too. In this case, two common key setup methods can be considered; 1st method where a common key is designated as a decoding key with which to communicate with the broadcast address, and 2nd method where the broadcast address is registered on the key table as the MAC address oriented to an individual key.

The 1st does not consume the storage area of the key table 37, but must share a key with other broadcasts. The 2nd method does consume the storage area of the key table 37, but is able to set up a decoding key dedicated to the broadcast. (1-5) Operation and Effect in this Embodiment

Structured as described hitherto, the decoding unit 34 discriminates packets having the broadcast address ("0xFFFFFFFFFFFF) based on the MAC address described in each packet of the data stream D31 received and also discriminates the packets of the multicast and uni-cast by checking MAC addresses using mask bits. At this time the decoding unit 34 calculates the Hash values of the MAC addresses, based on which the packets of the multicast and uni-cast are discriminated.

Then, the decoding unit 34 detects whether the discriminated packets have been encrypted, and when they have been encrypted, decode processing is perform with a decoding key taken out of the key table. At this time the decoding unit 34 judges based on the CKI of a packet by which key, whether the packet was encrypted using a common key or a private key, and the packet is decoded with either the common key or private key according to the result.

According to the structure described hitherto, a specific MAC address is used as the broadcast address, and only a part of bits of the MAC address is checked using mask bits so that various reception controls are available for such as broadcast, multicast, and uni-cast.

Also, the bit number of a MAC address is reduced with the use of a Hash function, and packets are discriminated with the reduced MAC address, so that the circuit scale of the decoding unit 34 can be reduced. (1-6) Other Modes of Embodiment

In the foregoing embodiment a bit of which mask bit is located at "1" is subjected to the target of comparison of MAC addresses. However, the present invention is not limited to it, but to the contrary, a bit of which mask bit is at "0" may be the target of comparison.

Also, in the foregoing embodiment a packet is destroyed when the retrieval result on the Hash table turns out "0". However, the present invention is not limited to it, but to the contrary the Hash table may be set up so that a packet is destroyed when the retrieval result of the Hash table turns out "1".

Furthermore, in the foregoing embodiment the MAC address is designated as the broadcast address, but the present invention is not limited to it, but another MAC address "0xFFFFFFFFFFFF" other than this may be designated as the broadcast address.

Furthermore, in the foregoing embodiment processing is performed in the order of the discrimination of broadcast addresses in the decode process (Step SP2), checking of MAC addresses on the key table (Step SP3), and retrieval of the Hash table (Step SP4). However, the present invention is not limited to it, decode processing may be carried out in another order.

Furthermore, in the foregoing embodiment explanation is given on the case where the present invention is applied to a satellite data transmission system. However, the present invention is not limited to it, but may be applied to other data transmission systems such as a cabled Internet, for example.

## (2) Second Embodiment

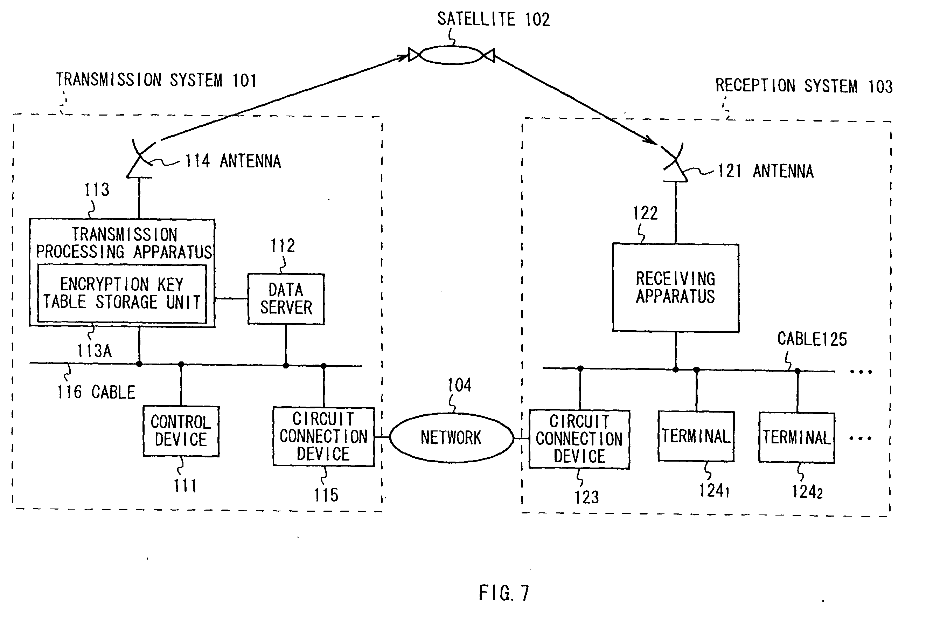

The Fig. 7 shows a structural example of one embodiment of a broadcasting system employing the present invention. (Note that the system here means that a plurality of devices are logically assembled, and it does not matter whether each device is housed in the same housing.)

In the embodiment in Fig. 7 a broadcasting system consists of a transmission system 101, a satellite 102, a reception system 103, and a network 104. To avoid the complexity of the figure the only reception system (reception system 103) for the 101 is shown in Fig. 7, however, more than two reception systems may be employed.

The transmission system 101 comprises a control device 111, a data server 112, a transmission processing device 113, an antenna 114, a circuit connection device 115, and a cable 116, and the control device 111, the data server 112, the transmission processing device 113, and the circuit connection device 115 are connected to each other with the cable 116, which constitutes a LAN (Local Area Network).

The control device 111 lets the transmission processing device 113 supply data to be distributed in satellite broadcasting by controlling the data server 112. Also, the control device 111 controls and lets the circuit connection device 115 obtain data to be distributed in satellite broadcasting from an external network 104 such as the Internet, and lets the transmission processing device 113 provide it. Furthermore, the control device 111 controls various processes in the transmission processing device 113.

The data server 112 retains data to be distributed in satellite broadcasting, and supplies necessary data to the transmission processing device 113 under the control of the control device 111.

The transmission processing device 113 packets data supplied from the data server 112 and circuit connection device 115 into IP (Internet Protocol) packets under the control of the control device 111, and furthermore blocks the IP packets into data blocks called a section described by the describer based on the multiprotocol Encapsulation regulated in e.g. EN 301 192 V1.1.1 (1997-12), DVB specification for data broadcasting ETSI (European Telecommunications Standards Institute). And, the transmission processing device 113 divides a section into payloads each having a given length, each payload appended with the header of a packet forming a transport stream (referred to as a TS (Transport Stream)), resulting in the formation of a packet of a kind of TS packet, to which further processes such as modulation and amplification are applied, which is finally transmitted as satellite broadcast waves via the antenna.

Also, the transmission processing device 113 has the MAC address of each of terminals $124_1$, $124_2$, ··· (as well as terminals forming a reception system not shown in Fig. 7) forming a reception system 103, and an encryption key table storage unit 113A storing an encryption key table in the form of a diagram oriented to the encryption key assigned to each MAC address (Media Access Control). Note that all the encryption keys assigned to each of the MAC addresses are basically different. However, the same encryption keys may be assigned to some of the MAC addresses.

Just for additional information, the MAC address is a system of an address applicable to the IEEE (Institute of Electrical Electronics Engineers) 802.3, etc., and is an individual value of 48 bits for each communication port. The MAC address of 48 bits consists of the higher half 24 bits being an identification number of a manufacturer (vendor) registered to and supervised by the IEEE, and the lower half 24 bits being a device identification number supervised by each vendor. Using the MAC address, each of terminals $124_1$, $124_2$, ··· can be specified.

According to the foregoing multiprotocol encapsulation, in the header of a section (section header) is arranged the MAC address of a terminal as the address of a terminal $124_i$ to which data arranged in the payload of a section is distributed. When it is necessary to encrypt data arranged in the payload of a section, namely an IC packet here, the transmission processing device 113 retrieves an encryption key assigned to the MAC address of a terminal $124_i$ as an address to be arranged in the header of a section from the encryption key table stored in the encryption key table storage unit 113A, with the use of which an IP packet arranged in the payload of that section is to be encrypted.

The encryption key table may be of the same type of a key table that a receiving apparatus 122 (to be described later) has, or may be of a different type. In this instance, an encryption key table is incorporated into a transmission system 101, however, it may be stored in a server (not shown in figure) in a network 104, which may be retrieved for use through the circuit connection device 115 as occasion arises.

Comprising a modem, TA (Terminal Adaptor), and DSU (Digital Service Unit), etc. for example, the circuit connection device 115 performs communication control over the network 104.

A reception system 103 consists of an antenna 121, the receiving apparatus 122, the circuit connection device 123, the terminal $124_1$, $124_2$, $\cdots$, and the cable 125, and the antenna 121, the receiving apparatus 122, the circuit connection device 123, and the terminal $124_1$, $124_2$, $\cdots$ are connected to each other with the cable 125 to form a LAN such as the Ethernet (trademark), for example.

The receiving apparatus 122 and the terminal $124_1$, $124_2$, $\cdots$ are computers, for example.

In this instance, the receiving apparatus 122 and the terminal $124_1$, $124_2$, $\cdots$ are connected to each other with the cable 125 to form a LAN, but they may be connected directly.

Furthermore, the receiving apparatus 122 may be a board that can be inserted into a slot of a computer as a terminal $124_i$.

Also, the receiving apparatus 122 and circuit connection device 123 may be constituted in a singular computer.

Satellite broadcasting waves transmitted from the transmission system 101 via the satellite 102 are received by the antenna 121, which are fed to the receiving apparatus 122. The receiving apparatus 122 applies a process to be described later to the received signals, the resultant data of which is supplied to a specific terminal $124_i$.

Formed similarly to the circuit connection device 115, the circuit connection device 123 is designed to perform communication control over the network 104.

Each terminal $124_1$, $124_2$, $\cdots$ is a computer, for example, and receives necessary data from the receiving apparatus 122, and conducts such processes as displaying, outputting, and storing it.

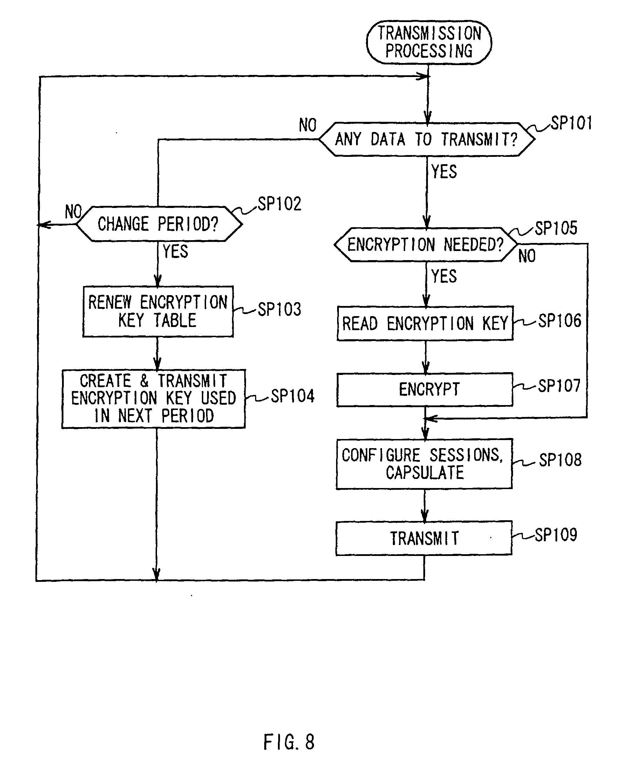

Next, explanation is given on a data transmission process performed by the transmission system 101, referring to a flowchart in Fig. 8.

First at the step SP101 the control device 111 judges whether there exists data to be transmitted to a terminal $124_i$.

Having a schedule table with a schedule to be transmitted described on it, the control device 111 judges based on that schedule table whether there exists data to be transmitted to the terminal $124_i$. The terminal

$124_i$ is designed to be capable of demanding data from the transmission system 101 over the network 104 by controlling the circuit connection device 123, and the control device 111 judges whether there exists data to be transmitted to the terminal $124_i$, depending upon whether such a demand is received by the circuit connection device 115 over the network 104.

When it is judged at the step SP101 that there exists no data to be transmitted to the terminal $124_1$, the control device 111 proceeds to the step SP102 and judges whether to change a period.

In the transmission system 101 it is designed such that encryption keys described on the encryption key table in the encryption key table storage unit 113 are renewed periodically or in irregular periods, where a period in which encryption is performed using an encryption key obtained as a result of a renewal every other time from second for example, is called an Even period, and where a period in which encryption is performed with the use of an encryption device obtained as a result of a renewal every other time from first is called an Odd period. Accordingly, with Even periods and Odd periods alternating, it is judged at the step SP102 whether it is the time to change from an Even period to an Odd period, or from an Odd period to an Even period.

When it is judged that a period is not to be changed, that is, continuing to encrypt data with the use of an encryption key being used presently in encrypting, it returns to the step SP101, resulting in repetition of the foregoing processes.

When it is judged that a period is to be changed at the step SP102, that is, changing from Even period to Odd period, or from Odd period to Even period, it proceeds to the step SP103, where the control device 111 replaces an encryption key stored on the encryption key table with an encryption key previously created at the step SP104 to be described later. In this way encryption is performed thereafter with the use of the renewed encryption key at the transmission processing device 113.

At the step SP104 the control device 111 creates (or obtain) an encryption key to be used for the next period, which is supplied to the transmission processing device 113, which transmits it as the decoding key. Then, it returns to the step SP101, where processes similar to those in the foregoing case are repeated. For additional information, the transmission of a decoding key may be carried out over a network as well as via the satellite 102.

That is, when a new decoding key used in the next period is transmitted to a reception system 103 just before the start of the next period, it may happen that the setting of a new decoding key may not be in time for the start of the next period. To cope with it, in this embodiment a new encryption key used in the next period is arranged to be distributed to the reception system 103 in just the previous period.

On the other hand, when it is judged that there exists data to be transmitted to a terminal $124_i$, the con-

trol device 111 lets the transmission processing device 113 transmit the data to be transmitted by controlling the data server 112 or circuit connection device 115. Upon the receipt of the data supplied from the data server 112 or circuit connection device 115, the transmission processing device 113 packets it into IP packets, and it proceeds to the step SP105.

The transmission processing device 113 judges at the step SP105 whether it is necessary to encrypt the IP packet, and when it is judged as one not necessary to be encrypted, it proceeds to the step SP108, skipping the steps SP106 and SP107.

Whereas, when the IP packet is judged at the step SP105 as one needed to be encrypted, it moves on the step SP106, then the information processing device 113 retrieves an encryption key assigned to the MAC address of a terminal $124_i$ to be the address of that IP packet from the encryption key table, and goes on to the step SP107. At the step SP107 the transmission processing device 113 encrypts the IP packet with the key retrieved at the step SP106, and proceeds to the step SP108.

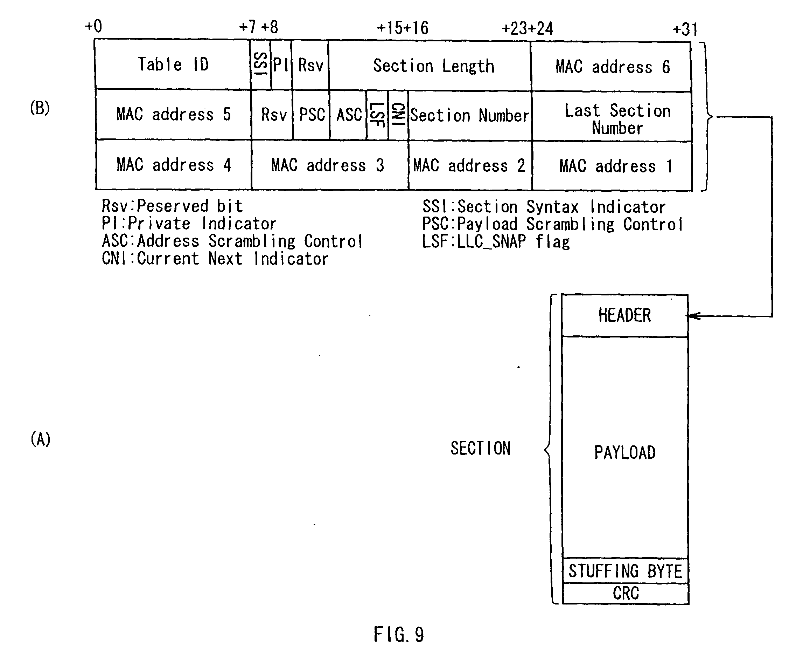

At the step SP108 the transmission processing device operates a CRC (Cyclic Redundancy Checking) code (or, check sum) with regard to the IP packet. As a result, a section as shown in Fig. 9 (A) is formed with that IP packet as the payload appended with a CRC code at the bottom and a section header at the top. A stuffing byte is inserted between the payload and CRC if needed.

The section header is composed of 3 bytes (96 bits) as shown in Fig. 9 (B). Detailed explanation the section header is omitted here as it is described in the foregoing EN 301 192 VI.1.1(1997-12), but it should be noted that a MAC address of 48 bits to become an address is arranged between the MAC address 1 and 6. Arranged at the MAC address 1 are 8 bits of the highest bits of the MAC address, and at the MAC address 2 the next highest 8 bits. Similarly, 8 bits of the MAC address are arranged at the MAC addresses 3 to 5 respectively, and the lowest 8 bits of the MAC address at the MAC address 6.

After constituting a section, the transmission processing device 113 divides that section into payloads each having a given length, and performs encapsulation to form a packet of the TS packet type by appending to each payload the header of the TS packet forming a transport stream of MPEG 2. Then, the transmission processing device 113 proceeds to the step SP109, where such necessary processes as modulation and amplification, etc. are applied to the resultant packet, (which is called a TS packet hereinafter, for this packet can be basically processed in a similar way as for the TS packet), which is transmitted as satellite broadcasting waves from the antenna 114, then it returns to the step SP101.

In the section header shown in Fig. 9 (B), the PSC (payload_scrambling_control) of 2 bits at the 43rd bit and 44th bit from the first is to be used, for example, as the encryption judgment flag to indicate whether data arranged in the payload of the section has been encrypted and the period judgment flag to denote which period, Even or Odd, the data is in.

To be concrete, for example, the lower bit of the PSC is used as the encryption judgment flag, being 1 when the data has been encrypted, and 0 when not. The higher bit of the PSC is used as the period judgment flag, being 0 in an Even period, and 1 in an Odd period. However, it is possible to use the higher bit of the PSC as the encryption judgment flag, and the lower bit as the period judgment flag. It is also possible to make the assignment of 0 and 1 as to the encryption judgment flag and the assignment of 0 and 1 as to the period judgment flag by the reverse method of the above case.

In the EN 301 192 V1.1.1(1997-12) it is stipulated that when the PSC is 00B (B indicates that the value arranged before it is a binary number), data has not been encrypted. Accordingly, it is preferable to make the encryption judgment flag be 1 when data has been encrypted, and 0 when not, resulting in the conformity to the specification of the DVB.

As described hitherto, in the broadcasting system in Fig. 7, since data is encrypted with the use of an encryption key assigned to the MAC address inherent to each terminal $124_i$, each terminal $124_i$ can be controlled with regard to reception, thus realizing the ultimate conditional access mechanism.

As to the method to realize a conditional access mechanism performing exact reception control by assigning an encryption key to the value inherent to the receiving side such as a MAC address or an IP address, details are disclosed in the Japan Patent Laid Open No. 215244/1998 applied by the applicant of this invention. However, with the communications satellite broadcasting of Japan conforming to a specification derived from the DVB-SI (Digital Video Broadcasting - Service Information / EN300 468), the use of the MAC address is to conform to that specification.

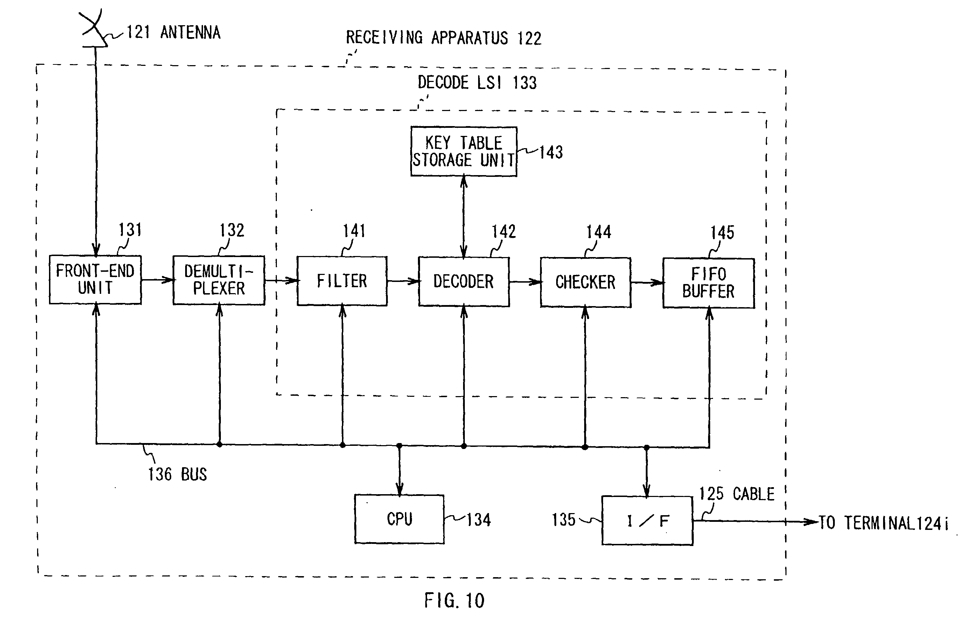

Next, the Fig. 10 shows a structural example of a receiving apparatus 122 in Fig. 7.

The antenna 121 receives satellite broadcasting waves transmitted from the transmission system 101 via the satellite 102, and the received signals are output to a front-end unit 131. The front-end unit 131 selects the signal of a specific channel from among the signals coming through the antenna 121 under the control of CPU 134, which is further decoded to a digital stream (IP_datagram_data_byte) of a TS packet and is output to a demultiplexer 132. The demultiplexer 132 extracts a specific TS packet out of the digital stream coming from the front-end unit 131 under the control of CPU 134, and is output to a decoding LSI (Large Scale Integrated Circuit) 133. That is to say, the demultiplxer 132 makes a selection of TS packets on the basis of a PID (Packet Identification) arranged in the header of a TS packet forming a digital stream, coming from the front-end unit 131, and outputs the only selected TS packet to the decoding LSI 133.

The decoding LSI 133 is a one-chip LSI consisting of a filter 141, a decoder 142, a key table storage unit 143, a checker 144, and a FIFO (First In First Out) buffer 145.

The filter 141 examines data, if needed, arranged in the payload of a section composed of TS packets coming from the demultiplexer 133, destroys the unneeded TS packets, and outputs the only needed TS packet to the decoder 142.

The decoder 142 decodes data (here, IP packets) arranged in the payload of a section consisting of TS packets coming from the filter 141 with the use of a decoding key stored in the key table storage unit 143, and outputs the resultant to the checker 144. Also, as explained in Fig. 8, with an encryption key renewed in the transmission system 101, and when the renewed encryption key is transmitted, the decoder 142 renews the content stored in the key table storage unit 143 with that encryption key as the decoding key under the control of CPU 134. Accordingly, the common key cryptosystem is used as the encryption method in this instance. However, the public key cryptosystem, too, may be used as an encryption method.

The key table storage unit 143 stores a key table onto which the MAC addresses corresponding to the terminals $124_1$, $124_2$,..., which are connected to each other with the cable 125, and decoding keys assigned to the MAC addresses are registered in correspondence with each other.

The checker 144 performs error detection on IP packets output by the decoder 142, with the use of the CRC code of a section arranged in that IP packet, under the control of CPU 134, thus judging whether decoding is performed correctly in the decoder. The IP packets processed in the checker 144 are fed to the FIFO buffer 145, which temporarily retains the IP packets coming from the checker 144, and outputs it to the I/F (Interface) 135 under the control of CPU 134. This results in adjusting the data rate of the IP packets.

The CPU 134 controls the front-end unit 131, the demultiplexer 133, the decoding LSI 133, and the I/F 135. The I/F 135 functions as the interface to supply the IP packets from the FIFO buffer 145, to a terminal $124_i$ through the cable 125 under the control of CPU 134.

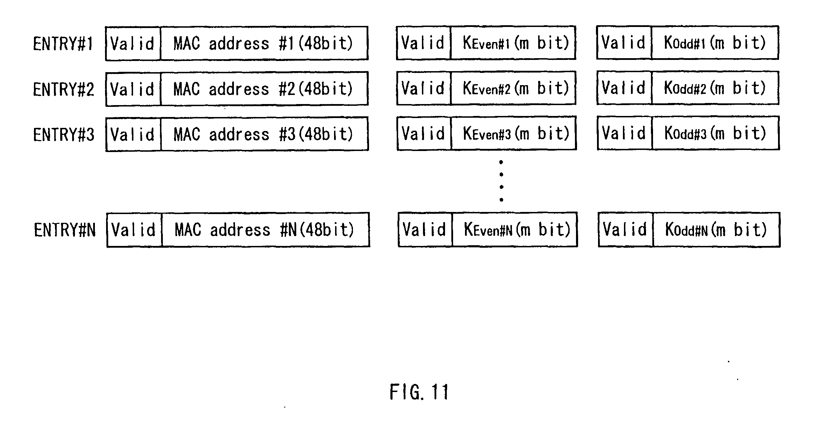

Next, the Fig. 11 shows a structural example of the key table stored in the key table storage unit 143 in Fig. 10.

The key table is made up of the same number of entries as that of terminals $124_1$, $124_2$... connected to the cable 125 for example. In Fig. 11 the key table contains N pieces of entries #1 to #N, therefore, in the present embodiment, the cable 125 is connected to the N number of terminals $124_1$ to $124_N$. The maximum number of entries on the key table is restricted by the storage capacity, etc. of the key table storage unit 143.

Registered on each entry #i (I=1,2, ..., N) are the MAC address MACaddress#i of 48 bits of a terminal 124i and a decoding key of m bits (m denotes cryptosystem in use) assigned to that MAC address, in correspondence with each other. As explained above, in the present mode of embodiment there exist an Even period and Odd period with encryption performed with a different encryption key in each period so that two decoding keys are registered in each entry #i; a decoding key (called "Even decoding key" hereinafter) $K_{Even\#i}$ to decode data encrypted in an Even period, and a decoding key (called "Odd decoding key" hereinafter) $K_{Odd\#i}$ to decode data encrypted in an Odd period.

Furthermore, a Valid bit (called "entry Valid bit" hereinafter) indicating whether that entry #i is valid is appended to the head of the MAC address MACaddress#i of each entry #i. Also, a Valid bit (called "decoding key Valid bit" hereinafter) indicating the validity is appended to each of Even decoding key $K_{Even\#i}$ and Odd decoding key $K_{Odd\#i}$.

As to the entry Valid bit and decoding key Valid bit, "1" denotes valid, and "0" invalid for example. However, it is also possible to apply a method reverse to the above case to the assignment of the entry Valid bit and decoding key Valid bit, "0" and "1".

As described before, in the transmission system 101 a decoding key equivalent to a new encryption key used in the next period is to be distributed to the reception system 103 just bnefore the next period. Accordingly, a decoding key (Odd decoding key) equivalent to an encryption key to be used in the next Odd period is distributed in an Even period, and a decoding key (Even decoding key) equivalent to an encryption key to be used in the next Even period is distributed in an ODD period. And, in the decoder 142, decoding keys distributed in such a manner are set up (overwrite, for example) on the key table. Therefore, in this case, a decoding key to be used in the next period is set up on the key table until the current period terminates. Furthermore, since the changing of decoding keys accompanying with the changing of periods can be performed simply by switching the position (address) of the key table from which the decoder 142 performs retrieving without involving CPU34, it can be done in a moment.

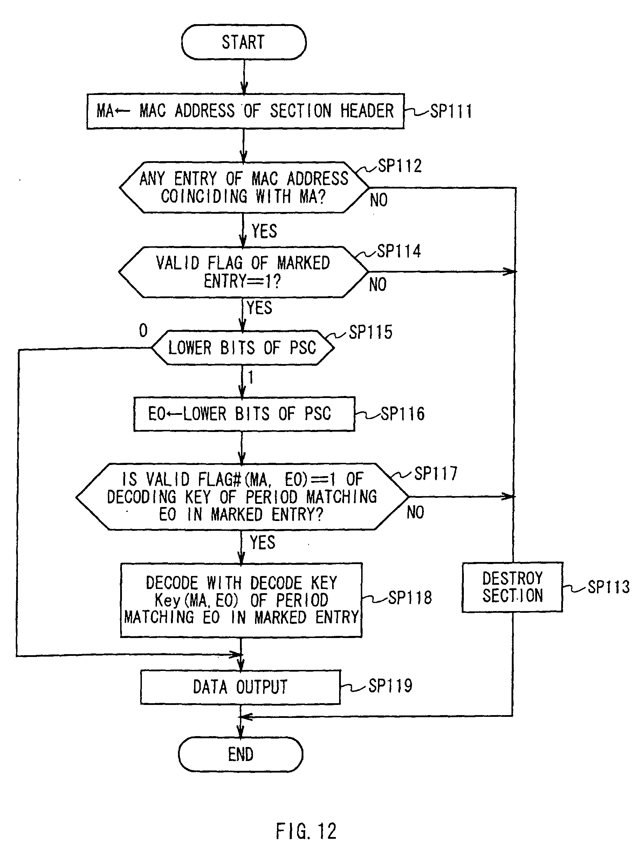

Next, explanation will be given on the operation of a receiving apparatus in Fig. 10 with reference to a flowchart in Fig. 12.

The antenna 121 receives satellite broadcasting waves transmitted from the transmission system 101 via the satellite 102, and received signals obtained are transformed into the digital stream of a TS packet through the front-end unit 131 and demultiplexer 133, and are supplied to the decoding LSI 133.

In the decoding LSI 133, a section consisting of TS packets output by the demultiplexer 132 is supplied to the decoder 142 through the filter 141. Upon the receipt of the section, the decoder 142 sets the MAC address arranged in the section header to a variable MA as a built-in register.

The decoder 142 retrieves the entry of a MAC address coinciding with the variable MA by referring to the key table, that is to say, reads a MAC address registered in each entry #i from the entry #1 of the key table in order, and compares (checking) the MAC address and variable MA to judge whether there exists the entry of a MAC address matching the variable MA at the step SP112. When it is judged at the step SP112 that there exists no entry of a MAC address matching the variable MA, namely, when a terminal having a MAC address arranged in the section header is not connected to the cable 125, the decoder 142 proceeds to the step SP113, and destroys the section supplied, terminating the processing.

Also, when it is judged at the step SP112 that there exists the entry of a MAC address matching the variable MA, it proceeds to the step SP114 with that entry regarded as the marked entry.

The decoder 142 judges at the step SP114 whether that marked entry is valid, based on the entry Valid bit of the marked entry. When it is judged at the step SP114 that the marked entry is not valid, namely when the entry Valid bit is "0", the decoder 142 proceeds to the step SP113, and destroys the section supplied, terminating the processing.

Accordingly, even when a terminal having a MAC address arranged in the section header of a section supplied to the decoder 142 is connected to the cable 125, if the entry of that MAC address is not valid, the section is not supplied to the terminal connected to the cable 125.

When the marked entry is judged to be valid at the step SP114, that is, when the entry Valid bit of the marked entry is "1", it proceeds to the step SP115, and the decoder 142 judges whether the data (IP packet) in the payload of the section has been encrypted, with reference to the lower bit of the PSC (Fig. 9 (B)) of the section header, namely the encryption judgment flag. When the encryption judgment flag is judged to be "0" at the step SP115, that is, when the IP packet arranged in the payload of the section has not been encrypted, the decoder 142 proceeds to the step SP119, skipping the steps SP117 and SP118, and outputs that unencrypted IP packet to the FIFO buffer 145 through the checker 144, terminating the processing.

And, the IP packet stored in the FIFO buffer 145 is supplied to a terminal 124$_i$ connected to the cable 125 through the I/F 135, which is specified by the MAC address in the section header of the section arranged in that IP packet.

Whereas, the encryption judgment flag is judged to be "1" at the step SP115, that is, when the IP packet arranged in the payload of the section is encrypted, it goes on to the step SP116, and the decoder 142 sets the higher bit of the PSC (Fig. 9 (B)) of the section header of that section, namely the period judgment flag, to the variable EO as being a built-in register, and then proceeds to the step SP117.

The decoder 142 judges at the step SP117 whether the decoding key Valid bit # (MA, EO) is valid in a period corresponding to the variable EO in the marked entry in which the MAC address matches the variable MA, that is, in an Even period when the variable EO is "0", and in an Odd period when the variable EO is "1". When it is judged that the decoding key Valid bit # (MA, EO) is not valid, that is, that the decoding key Valid bit # (MA, EO) is "0", it proceeds to the step SP113, and the decoder 142 destroys the section supplied, terminating the processing.

Accordingly, even when a terminal having a MAC address arranged in the section header of the section supplied to the decoder 142 is connected to the cable 125 and the entry of that MAC address is valid, if the decoding key in a period indicated by the period judging flag is not valid, that section is not supplied to the terminal connected to the cable 125.

On the other hand, when the decoding key Valid flag # (MA, EO) is judged to be valid at the step SP117, namely when the decoding key Valid flag # (MA, EO) is "0", it proceeds to the step SP118, and the decoder 142 retrieves the decoding key (MA, EO) in a period matching the variable EO in the marked entry where the MAC address coincides with the variable MA, from the key table, and decodes the IP packet arranged in the payload of the section using the decoding key (MA. EO), and then it proceeds to the step SP119.

The decoder 142 outputs the decoded IP packet to the FIFO buffer 145 through the checker 144 at the step SP119, and the processing is terminated.

And, the IP packet stored in the FIFO buffer 145 is supplied to a terminal 124$_i$ connected to the cable 125, specified by the MAC address in the section header of the section having the IP packet through the I/F 135.

Processes following the flowchart in Fig. 12 is performed every time a section is supplied to the decoder 142.

As described hitherto, the validity of the entry is judged based on the entry Valid bit registered in the entry of the key table, and the output of data to a terminal is controlled, so that it is possible to easily restricts users (terminals) to obtain (receive) data correctly.

Furthermore, since the output of data is controlled based on the decoding key Valid bit of the key table, it can be easily practiced to allow a certain terminal to receive data in the only period, either in an Even period or Odd period, or to prohibit it from receiving data in either one period.

The setting of the entry Valid bit and decoding key Valid bit can be done in a receiving apparatus 122 independently, or may be done based on the information transmitted from the transmission system 101.

In this embodiment, a decoding key (as well as an encryption key) is assigned to the MAC address inherent to a terminal, however, it is also possible to decide a terminal ID (Identification) inherent to a terminal, and to assign a decoding key to that terminal ID. Furthermore, it is also possible to determine a group ID inherent to a plurality of terminals, and to assign a decoding key to that group ID. However, when assigning a decoding key to a MAC address, it is possible to easily incorporate an exact conditional access mechanism as described hitherto, into the outline of digital satellite broadcasting based on the EN 301 192 V1.1.1 (1997-12) which is the DVB standards.

In this embodiment, the one-chip decoding LSI 133 comprises the filter 141, the decoder, 142, the key table storage unit 143, the checker 144, and the FIFO buffer 145, however, it is also possible to separately form a filter 141, decoder, 142, key table storage unit 143, checker 144, and FIFO buffer 145 as one chip. However, the employment of a one-chip decoding LSI 133 incorporating a filter 141, decoder, 142, key table storage unit 143, checker 144, and FIFO buffer 145 may increase the security because the decoding of data is performed within the decoding LSI 133, completely sheltered from the outside. Furthermore, from the viewpoint of the reducing of the installation area of circuits and high-speed processing, it is preferable to incorporate the filter 141, the decoder, 142, the key table storage unit 143, the checker 144, and the FIFO buffer 145 into a one-chip decoding LSI 133.

Further, in this embodiment, explanation is given on the case where data is distributed by the digital satellite broadcast, however, the present invention may be applied to such a case where data is distributed by the multicast, for example.

Further, in the present embodiment, two types of periods, namely Even period and Odd period, are provided, however, it is also possible not to use such periods, or to provide more than two types of periods. Likewise, it is possible to have the only decoding key or more than two decoding keys registered into each entry of the key table.

In the present embodiment, data is distributed in a form based on the DVB standards, however, data may be distributed in a form, not based on the DVB standards.

Next, a series of the foregoing processes can be performed not only with hardware but with software. In the case of performing the series of processes with software, a program constituting the software is installed on a general-purpose computer or one-chip microcomputer.

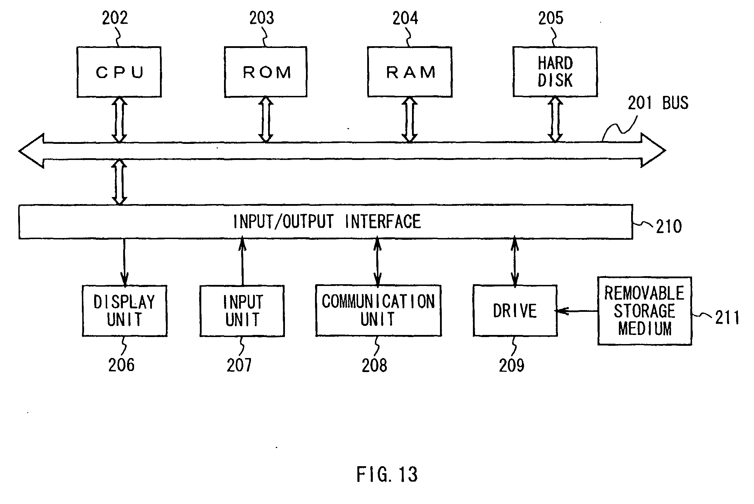

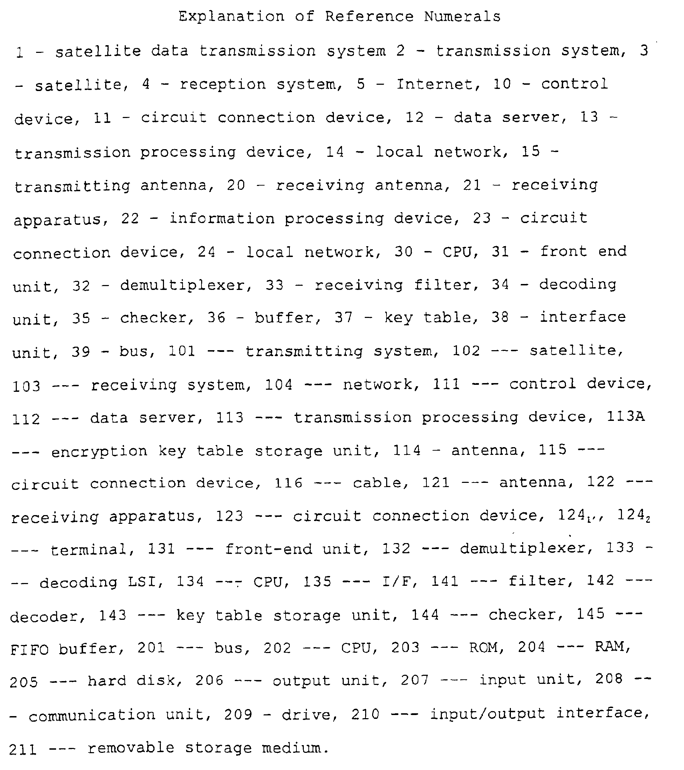

Fig. 13 shows a structural example of one embodiment of a computer installed with a program performing a series of the foregoing processes.

A program may be stored in advance into a storage medium such as a hard disk 205 or ROM 203, which is built into a computer.

Or, a program may be stored (recorded) temporarily or perpetually in removable recording medium 211 such as a floppy disk, CD-ROM (Compact Disc Read Only Memory), MO (Magneto Optical) disc, DVD (Digital Versatile Disc), magnetic disc, or semiconductor memory. Such removable recording medium 211 may be provided as the so-called package software.

Not only installed into a computer from the foregoing removable recording medium 211, but a program may be transferred by wireless from a download site to a computer via an artificial satellite for digital satellite broadcasting, or may be transferred to a computer by wire over a network such as LAN (Local Area Network) or the Internet. The computer receives such programs transferred at the communications unit 208, which can be installed in the built-in hard disk 205.

The computer incorporates a CPU (Central Processing Unit) 202. Connected to an input/output interface 210 with a bus 201, the CPU 202 executes a program stored in a ROM (Read Only Memory) 203 according to commands which are entered by a user through the input/output interface 210 with an input unit 207 such as a keyboard and mouse, etc. Also, the CPU 202 loads into a RAM (Random Access Memory) 204 and performs programs stored in the hard disk 110, programs transferred from a satellite or over a network to the communications unit 208, and installed in the hard disk 205, or programs installed in the hard disk 205 after being retrieved from the removable recording media 211 installed into the drive 209. In this manner, the CPU 202 performs processes following the foregoing flowchart, or processes following the structure of the foregoing block diagrams. And, the CPU 202 outputs, when required, the processed results from the output unit 206 such as an LCD (Liquid Crystal Display) or a speaker, etc. through the input/output interface 210, or transmits them from the communications unit 208, and furthermore, lets the hard disk record them.

As to the present specification, the processing steps describing a program to let the computer perform various processes are not necessarily followed in a time series along the order described as the flowchart, but the specification includes processes to be performed concurrently or individually (e.g., concurrent processing or processing with objects).

Also, programs may be those which are processed by a single computer, or by a plurality of computers in distributed processing. Furthermore, programs may be those which are transferred to a computer located in a faraway site to be performed.

Industrial Applicability

The present invention can be utilized for the data transmission system using the digital satellite broadcasting and the data transmission system using the wired network.

**Claims**

**1.** An information transmission system for transmitting data from a transmitting apparatus over a specified transmission circuit to a plurality of receiving apparatuses, each having an individual address, comprising:

said transmitting apparatus for, when transmitting data individually to said receiving apparatus, appending the individual address of said receiving apparatus the data before transmission, and for, when transmitting common data to said receiving apparatuses belonging to a certain group, appending common address information indicating the common portion of said addresses common to said certain group of said receiving apparatuses and address range information designating the range of the common portion of said address, to the data before transmission; and
said receiving apparatus for receiving said data, and for decoding the data only when the individual address and the address affixed to the data coincide with each other, or only when said individual address and said common address information appended to said data agree with each other when compared within a range indicated by said address range information.

2. The information transmission system according to Claim 1, wherein:

said transmitting apparatus, when transmitting data to all said plurality of receiving apparatuses, appended a given broadcast address as said common address information to said data before transmission; and
said receiving apparatus decodes said data received only when said broadcast address is appended to the data.

3. The information transmission system according to Claim 1, wherein
said receiving apparatus converts said address into an address of a smaller number of bits, and compares said individual address to said address appended to said data, using the converted address.

4. The information transmission system according to Claim 1, wherein:

said transmitting apparatus, when transmitting data individually to said receiving apparatuses, encrypts the data using a private key corresponding to said address inherent to the receiving apparatus, and when transmitting common data to a certain group of said receiving apparatuses, encrypts the data using a given common key; and

said receiving apparatus decodes the data transmitted individually to said receiving apparatus, using the private key corresponding to said address inherent to said receiving apparatus, and decode the data transmitted to said receiving apparatuses of the certain group, using said common key.

5. An information transmission method of transmitting data from a transmitting apparatus through a specified transmission circuit to a plurality of receiving apparatuses each having an individual address, comprising:

a step of, when data is transmitted individually to said receiving apparatuses, appending an individual address of said receiving apparatus to the data before transmission, and of, when data is transmitted to said receiving apparatuses of a certain group, appended common address information indicating the common portion of said address common to said certain group of said receiving apparatuses and address range information designating the range of the common portion of said addresses, to the date before transmission; and
a step of receiving said data, and decoding the data only when said individual address and said address affixed to the data coincide with each other, or only when said individual address and said common address information appended to said data agree with each other when compared within a range indicated by said address range information.

6. A transmitting apparatus for transmitting data to a plurality of receiving apparatuses each having an individual address, wherein
when data is transmitted individually to said receiving apparatuses, an address inherent to said receiving apparatus is appended to the data before transmission, and when common data is transmitted to said receiving apparatuses of a certain group, common address information denoting the common portion of said addresses common to said group of said receiving apparatuses and address range information designating the range of the common portion of said addresses are appended to the date before transmission.

7. The transmitting apparatus according to Claim 6, wherein
when said data is transmitted to all said plurality of said receiving apparatuses, a given broadcast address is appended as said common address information the data before transmission.

8. The transmitting apparatus according to Claim 6, wherein:

when said data is transmitted individually to said receiving apparatuses, the data is encrypted using a private key corresponding to said address inherent to the receiving apparatus, and when common data is transmitted to said receiving apparatuses of a certain group, the data is encrypted using a given common key.

9. A receiving apparatus for receiving data transmitted from a predetermined transmitting apparatus and decoding it, wherein

said data is decoded only when the address affixed to the data received and the address inherent to the receiving apparatus coincide with each other, or only when said individual address and said common address information appended to the data agree with each other when compared within a range indicated by said address range information, based on the common address information indicating the common portion of said address common to all the said plurality of receiving apparatuses and address range information designating a range of the common portion of the address.

10. The receiving apparatus according to Claim 9, wherein

the data is decoded when a given broadcast address is appended to said data received.

11. The receiving apparatus according to Claim 9, wherein

said address is converted into an address of a smaller number of bits, and said individual address is compared to said address appended to said data, using the converted address.

12. A data processing device for processing a data block in which the destination address of data is arranged, as well as the data, comprising;

retrieving means for referring to a table having an entry to which destination addresses and entry validity information indicating whether an entry to which said address is registered is valid, are registered, in order to retrieve as a marked entry an entry having an destination address matching the destination address of said data block, from said table;

judging means for judging whether said marked entry is valid, based on said entry validity information registered to said marked entry; and

output control means for controlling the output of data arranged in said data block, based on the judgment result obtained by said judging means.

13. The data processing device according to Claim 12, wherein said output control means;

outputs said data to the destination address arranged in said data block when said marked entry is valid; and

destroys said data when said marked entry is not valid.

14. The data processing device according to Claim 12, wherein said data is encrypted, and furthermore, comprising

decoding means for decoding said encrypted data.

15. The data processing device according to Claim 14, wherein:

said data is encrypted using a key assigned to the destination address of said data;

a key assigned to said destination address in addition to the destination address and entry validity information us also registered to each entry in said table; and

said decoding means decodes said data using said key registered to said table.

16. The data processing device according to Claim 15, wherein

said decoding means decodes data arranged in said data block, using said key assigned to the destination address of said data block in said table.

17. The data processing device according to Claim 16, wherein:

key validity information indicating whether the key is valid, in addition to said destination address, said entry validity information, and said key is also registered to each entry in said table; and

said decoding means;

judges whether said key is valid based on said key validity information of the key assigned to the destination address of said data block; and

decodes the data using said key when the key is valid.

18. The data processing device according to Claim 15, wherein

two or more keys which are assigned to said destination address, in addition to the destination address and said entry validity information are registered to each entry in said table.

19. The data processing device according to Claim 18, wherein

as to said two or more keys, key validity information indicating whether the keys are valid is registered to each entry in said table.

20. The data processing device according to Claim 12, furthermore comprising

table recording means for recording said table.

21. The data processing device according to Claim 12, wherein

said destination address is a MAC (Media Access Control) address of a communication terminal which has to receive said data.

22. The data processing device according to Claim 12, wherein

said data block is based on the DVB (Digital Video Broadcasting) standards.

23. The data processing device according to Claim 12, wherein

said data processing device is a one-chip IC (Integrated Circuit).

24. A data processing method of processing a data block in which the destination address of data is arranged, as well as the data, and comprising;

a retrieving step of referring to a table having an entry to which destination addresses and entry validity information indicating whether an entry to which said destination address is registered is valid, are registered, in order to retrieve as a marked entry an entry having a destination address matching the address of said data block, from the table;

a judging step of judging whether said marked entry is valid, based on said entry validity information registered to said marked entry; and

an output control step of controlling the output of data arranged in said data block, based on the judgment result obtained by said judgment step.

25. A recording medium for recording programs to make a computer process a data block in which the destination address is arranged, as well as the data, comprising;

a retrieving step of referring to a table having an entry to which a destination address and entry validity information indicating whether an entry to which the destination address is registered is valid, are registered, in order to retrieve as a marked entry an entry having an address matching the destination address of said data block, from the table;

a judging step of judging whether said marked entry is valid, based on said entry validity information registered to said marked entry; and

an output control step of controlling the output of data arranged in said data block, based on the judgment result obtained by said judgment step.

FIG. 1

FIG. 2

EP 1 143 659 A1

| 1 BYTE | 1 BYTE | 1 BYTE | 1 BYTE |
|---|---|---|---|

| D7          DO | D7                              DO | D7                        DO | D7                      DO |
|---|---|---|---|
| TABLE ID | SSI / PI / Rsv / SECTION LENGTH | | MAC ADDRESS#6 |
| MAC ADDRESS#5 | Rsv/CKI / PSC / ASC / LSF / CNI | SECTION NO. | LAST SECTION NO. |
| MAC ADDRESS#4 | MAC ADDRESS#3 | MAC ADDRESS#2 | MAC ADDRESS#1 |

SECTION {

| HEADER |
|---|
| PAYLOAD |
| STUFFING BYTE |
| C R C |

FIG. 3

D47 D46 D45 D44 D43 D42 D41 D40 D39                    D4 D3 D2 D1 D0

MASK BITS | 1 | 1 | 1 | 1 | 1 | 1 | 1 | 1 | 1 | • • • | 1 | 0 | 0 | 0 | 0 |

MAC ADDRESS | 0 | 0 | 0 | 0 | 1 | 0 | 0 | 0 | 0 | • • • | 1 | 1 | 0 | 0 | 1 |

M R | 0 | 0 | 0 | 0 | 1 | 0 | 0 | 0 | 0 | • • • | 1 | 1 | 0 | 1 | 1 |

| VERIFY PARTS WITH THE MASK BEING 1, COINCIDENCE CONDITION IS THAT MAC ADDRESS=MR MUST BE SATISFIED IN ALL BITS IN THIS SECTION | THOUGH MAC ADDRESS≠MR IN THIS BIT (D1), IT DOES NOT NEGATE THE COINCIDENCE CONDITION BECAUSE THE MASK IS 0 |

FIG. 4

EP 1 143 659 A1

| #1 | Vaild | MAC ADDRESS #1 (48bit) | MASK #1 (48bit) | Vaild | $K_{1Even}$ (mbit) | Vaild | $K_{1Odd}$ (mbit) |

| #2 | Vaild | MAC ADDRESS #2 (48bit) | MASK #2 (48bit) | Vaild | $K_{2Even}$ (mbit) | Vaild | $K_{2Odd}$ (mbit) |

| #3 | Vaild | MAC ADDRESS #3 (48bit) | MASK #3 (48bit) | Vaild | $K_{3Even}$ (mbit) | Vaild | $K_{3Odd}$ (mbit) |

| #4 | Vaild | MAC ADDRESS #n (48bit) | MASK #n (48bit) | Vaild | $K_{nEven}$ (mbit) | Vaild | $K_{nOdd}$ (mbit) |

FIG. 5

FIG. 6

FIG. 7

SATELLITE 102

RECEPTION SYSTEM 103

121 ANTENNA

122

RECEIVING APPARATUS

CABLE 125

CIRCUIT CONNECTION DEVICE 123

TERMINAL 124₁

TERMINAL 124₂

NETWORK 104

TRANSMISSION SYSTEM 101

114 ANTENNA

113

TRANSMISSION PROCESSING APPARATUS

ENCRYPTION KEY TABLE STORAGE UNIT 113A

DATA SERVER 112

CIRCUIT CONNECTION DEVICE 115

CONTROL DEVICE 111

116 CABLE

24

TRANSMISSION
PROCESSING

NO — ANY DATA TO TRANSMIT? ⟵ SP101

YES

NO — CHANGE PERIOD? ⟵ SP102

YES

ENCRYPTION NEEDED? ⟵ SP105

NO

YES

RENEW ENCRYPTION
KEY TABLE ⟵ SP103

READ ENCRYPTION KEY ⟵ SP106

CREATE & TRANSMIT
ENCRYPTION KEY USED
IN NEXT PERIOD ⟵ SP104

ENCRYPT ⟵ SP107

CONFIGURE SESSIONS,
CAPSULATE ⟵ SP108

TRANSMIT ⟵ SP109

FIG. 8

(B)

| Table ID | SSI | PI | Rsv | Section Length | MAC address 6 |
| MAC address 5 | Rsv | PSC | ASC | LSF | CNI | Section Number | Last Section Number |
| MAC address 4 | MAC address 3 | MAC address 2 | MAC address 1 |

+0  +7 +8  +15 +16  +23 +24  +31

Rsv:Peserved bit
PI:Private Indicator
ASC:Address Scrambling Control
CNI:Current Next Indicator

SSI:Section Syntax Indicator
PSC:Payload Scrambling Control
LSF:LLC_SNAP flag

(A)

SECTION

| HEADER |
| PAYLOAD |
| STUFFING BYTE |
| CRC |

FIG. 9

EP 1 143 659 A1

FIG. 10

ENTRY#1 | Valid | MAC address #1(48bit) | | Valid | K$_{Even\#1}$(m bit) | | Valid | K$_{Odd\#1}$(m bit)

ENTRY#2 | Valid | MAC address #2(48bit) | | Valid | K$_{Even\#2}$(m bit) | | Valid | K$_{Odd\#2}$(m bit)

ENTRY#3 | Valid | MAC address #3(48bit) | | Valid | K$_{Even\#3}$(m bit) | | Valid | K$_{Odd\#3}$(m bit)

⋮

ENTRY#N | Valid | MAC address #N(48bit) | | Valid | K$_{Even\#N}$(m bit) | | Valid | K$_{Odd\#N}$(m bit)

FIG. 11

START

MA← MAC ADDRESS OF SECTION HEADER ～SP111

ANY ENTRY OF MAC ADDRESS
COINCIDING WITH MA? ～SP112
NO

YES

VALID FLAG OF MARKED
ENTRY＝1? ～SP114
NO

YES

0  LOWER BITS OF PSC ～SP115

1

EO←LOWER BITS OF PSC ～SP116

IS VALID FLAG#(MA, EO)＝1 OF
DECODING KEY OF PERIOD MATCHING
EO IN MARKED ENTRY? ～SP117
NO

YES

DECODE WITH DECODE KEY
Key(MA, EO) OF PERIOD
MATCHING EO IN MARKED ENTRY ～SP118

DESTROY
SECTION ～SP113

DATA OUTPUT ～SP119

END

FIG. 12

202      203      204      205

| C P U | R O M | R A M | HARD DISK |

201 BUS

INPUT/OUTPUT INTERFACE ~210

| DISPLAY UNIT | INPUT UNIT | COMMUNICATION UNIT | DRIVE | REMOVABLE STORAGE MEDIUM ~211 |

206      207      208      209

FIG. 13

Explanation of Reference Numerals

1 - satellite data transmission system 2 - transmission system, 3 - satellite, 4 - reception system, 5 - Internet, 10 - control device, 11 - circuit connection device, 12 - data server, 13 - transmission processing device, 14 - local network, 15 - transmitting antenna, 20 - receiving antenna, 21 - receiving apparatus, 22 - information processing device, 23 - circuit connection device, 24 - local network, 30 - CPU, 31 - front end unit, 32 - demultiplexer, 33 - receiving filter, 34 - decoding unit, 35 - checker, 36 - buffer, 37 - key table, 38 - interface unit, 39 - bus, 101 --- transmitting system, 102 --- satellite, 103 --- receiving system, 104 --- network, 111 --- control device, 112 --- data server, 113 --- transmission processing device, 113A --- encryption key table storage unit, 114 - antenna, 115 --- circuit connection device, 116 --- cable, 121 --- antenna, 122 --- receiving apparatus, 123 --- circuit connection device, $124_1$, $124_2$ --- terminal, 131 --- front-end unit, 132 --- demultiplexer, 133 --- decoding LSI, 134 --- CPU, 135 --- I/F, 141 --- filter, 142 --- decoder, 143 --- key table storage unit, 144 --- checker, 145 --- FIFO buffer, 201 --- bus, 202 --- CPU, 203 --- ROM, 204 --- RAM, 205 --- hard disk, 206 --- output unit, 207 --- input unit, 208 --- communication unit, 209 - drive, 210 --- input/output interface, 211 --- removable storage medium.

<table>
<tr>
<td colspan="2">**INTERNATIONAL SEARCH REPORT**</td>
<td>International application No.<br>PCT/JP00/07682</td>
</tr>
</table>

A.  CLASSIFICATION OF SUBJECT MATTER
     Int.Cl$^7$   H04L12/18, H04L9/36, H04L9/32,
                  H04H1/00, H04N7/16

According to International Patent Classification (IPC) or to both national classification and IPC

B.   FIELDS SEARCHED

Minimum documentation searched (classification system followed by classification symbols)
     Int.Cl$^7$   H04L12/18, H04L9/36, H04L9/32,
                  H04H1/00, H04N7/16

Documentation searched other than minimum documentation to the extent that such documents are included in the fields searched
     Jitsuyo Shinan Koho        1926-1996    Toroku Jitsuyo Shinan Koho  1994-2000
     Kokai Jitsuyo Shinan Koho  1971-2000    Jitsuyo Shinan Toroku Koho  1996-2000

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br><br>Y | JP, 10-215244, A (Sony Corporation),<br>11 August, 1998 (11.08.98),<br>Par. Nos. [0046] to [0088], [0102]   (Family: none) | 1,5,6,9<br>2-4,7,8,10,11 |
| Y | JP, 10-210066, A (Sumitomo Electric Industries, Ltd.),<br>07 August, 1998 (07.08.98),<br>Par. Nos. [0008] to [0011]   (Family: none) | 3,11 |
| Y | EP, 784392, A2 (Mitsubishi Electric Corporation),<br>16 July, 1997 (16.07.97),<br>Figs. 23, 24<br>& JP, 9-252294, A   & CA, 2194421, A<br>& TW, 315451, A     & KR, 98013071, A | 4,8 |
| Y | Jeffery Mogul "RFC919", October, 1984 (10.84) | 2,7,10 |
| E,A | JP, 2000-312225, A (Hitachi Information Technology Co., Ltd.),<br>07 November, 2000 (07.11.00),<br>Claim 18<br>& EP, 993153, A1    & CN, 1250290, A<br>& CA, 2282159, A1 | 12-25 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    12 December, 2000 (12.12.00) | Date of mailing of the international search report<br>    19 December, 2000 (19.12.00) |
|---|---|
| Name and mailing address of the ISA/<br>    Japanese Patent Office | Authorized officer |
| Facsimile No. | Telephone No. |

Form PCT/ISA/210 (second sheet) (July 1992)

## INTERNATIONAL SEARCH REPORT

| International application No. |
| --- |
| PCT/JP00/07682 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Sony Research Forum 1996 Ronbunshuu, 01 February, 1997 (01.02.97), Tomoyuki ASANO et al., "PRISM Prototype ni okeru Conditional Access System", pp.300-304 | 1-11 |

Form PCT/ISA/210 (continuation of second sheet) (July 1992)

## INTERNATIONAL SEARCH REPORT

| International application No. |
|---|
| PCT/JP00/07682 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

    The inventions of claims 1-11 relate to control of broadcasting by use of common address.

    The inventions of claims 12-25 relate to transmission control by using information concerning validity of entry of address table.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

                         ☐    No protest accompanied the payment of additional search fees.

Form PCT/ISA/210 (continuation of first sheet (1)) (July 1992)